**Europäisches Patentamt**

**European Patent Office**

**Office européen des brevets**

(19)

(11) Publication number: **0 342 759 B1**

(12)

# EUROPEAN PATENT SPECIFICATION

(45) Date of publication of patent specification: **15.09.93**

(51) Int. Cl.5: **B01J 29/06**, B01J 29/16, B01J 29/26, B01J 29/36, C10G 45/64, C10G 47/20

(21) Application number: **89201242.8**

(22) Date of filing: **16.05.89**

(54) **Process for the preparation of catalyst particles.**

(30) Priority: **19.05.88 GB 8811817**

(43) Date of publication of application:
**23.11.89 Bulletin 89/47**

(45) Publication of the grant of the patent:
**15.09.93 Bulletin 93/37**

(84) Designated Contracting States:
**BE CH DE ES FR GB LI NL SE**

(56) References cited:
**EP-A- 0 216 938**
**GB-A- 1 452 521**
**US-A- 3 890 247**

(73) Proprietor: **SHELL INTERNATIONALE RESEARCH MAATSCHAPPIJ B.V.**
**Carel van Bylandtlaan 30**
**NL-2596 HR Den Haag(NL)**

(72) Inventor: **Gosselink, Johan Willem**
**Badhuisweg 3**
**NL-1031 CM Amsterdam(NL)**
Inventor: **Schaper, Hennie**
**Badhuisweg 3**
**NL-1031 CM Amsterdam(NL)**

EP 0 342 759 B1

**Description**

The present invention relates to a process for the preparation of catalyst particles.

Catalysts for the conversion of hydrocarbons in the presence of hydrogen are well-known. In this respect reference is made to US-A-3,929,672, disclosing a catalyst composition comprising an intimate mixture of a crystalline aluminosilicate zeolite, an amorphous refractory oxide material that acts like a matrix or binder material, and one or more hydrogenating components. These components include Group 8 and Group 6b metal compounds and include in particular the metals, oxides and sulphides of platinum, palladium, cobalt, nickel, tungsten and molybdenum. One method of preparing the catalyst is mechanical admixture, e.g. mulling, which involves admixing the zeolite in the form of a powder with the finely divided refractory oxide material. Minor amounts of water, with or without an acidic peptizing agent, such as a strong mineral acid, are usually added to facilitate mixing. After shaping the admixture thus obtained into desired particles the particles are calcined and loaded with the hydrogenating components by ion-exchange or impregnation.

It will be clear that when the catalyst is subjected to ion exchange or impregnation, both the binder material and the zeolite will contain hydrogenating component(s).

It would be advantageous to have catalysts which comprise a binder, a zeolite and hydrogenating components, but in which the binder contains different hydrogenating components from the one(s) on the zeolite or the same component(s) in a different amount. One would then be enabled to create catalysts with a tailored hydrogenating activity. From US-A-3,890,247 a hydrocracking catalyst is known which comprises a zeolite Y, molybdic oxide powder and a binder material. The catalyst is prepared by co-mulling the molybdic oxide powder with the zeolite Y prior to mixing with the binder material.

In US-A-3,394,074 a hydrocracking catalyst composition is mentioned comprising a faujasite (zeolitic) cracking component which contains nickel and tungsten, and a so-called nominal hydrofining catalyst which consists of a base of a refractory oxide and metal components with hydrodenitrogenating activity. Examples of refractory oxides include alumina, silica-alumina, silica-boria and silica-magnesia. Catalytically active metals are nickel-tungsten, nickel-molybdenum, cobalt-tungsten and cobalt-molybdenum. The reference does not give any indication as to how such a catalyst composition should be prepared.

It has now been found that the preparation of such catalyst compositions must fulfil certain requirements. If these requirements are not fulfilled the catalyst composition obtained tends to be weak and not satisfactory for use on a commercial scale.

Accordingly, the present invention provides a process for the preparation of catalyst particles with hydrogenating activity, which process comprises co-mulling a binder material with a solid molybdenum and/or tungsten compound, mixing the co-mulled product so obtained with a zeolite, shaping the mixture so obtained to yield catalyst particles, and drying the catalyst particles.

It has been found that the catalyst particles thus obtained are strong and since the binder material contains hydrogenating activity, the activity of the catalyst compositions after deposition of the same or different hydrogenating metals onto the zeolite is improved.

The term zeolite in this specification is not to be regarded as comprising only crystalline aluminium silicates. The term also includes crystalline silica (silicalite), silicoaluminophosphates (SAPO), chromosilicates, gallium silicates, iron silicates, aluminium phosphates (ALPO), titanium aluminosilicates (TASO), boron silicates, titanium aluminophosphates (TAPO) and iron aluminosilicates. Preferably, the zeolite is a crystalline aluminium silicate.

The zeolite used is preferably a wide-pore zeolite, i.e. a zeolite with pores having a diameter of at least 0.7 nm. These zeolites include zeolites L, O, omega, X, Y and the natural faujasites. More preferably the zeolite is selected from the natural and synthetic faujasite zeolites, in particular zeolite Y. The zeolite may be modified by ion exchange and/or chemical treatment such as treatment with $SiCl_4$ and/or steaming and/or calcination reactions. A very suitable zeolite is a zeolite Y with a unit cell size of at most 2.46 nm, in particular of at most 2.44 nm. The use of zeolites Y as described in EP-A-247,678 and EP-A-247,679 is preferred. These zeolites Y have a unit cell size below 2.445, in particular below 2.435 nm, a water adsorption capacity (at 25 °C and a $p/p_o$ value of 0.2) of at least 8% wt, and have such a total pore volume that between 10 and 60% of the total pore volume is made up of pores having a diameter of at least 8 nm. The unit cell size of the zeolite Y used is preferably at least 2.42 nm.

The binder material is suitably a refractory oxide. It has preferably been selected from the group consisting of silica, alumina, silica-alumina, magnesia, titania, zirconia, thoria and mixtures thereof. Binder material consisting of alumina is particularly preferred. Catalyst particles with alumina as binder material show the greatest strength.

2

The co-mulled binder containing molybdenum and/or tungsten is mixed with zeolite prior to any calcination so as to ensure that its binding function remains intact.

The binder material may contain one or more catalytically active, e.g. hydrogenating components when it is co-mulled according to the present invention. In this way one is able to create a catalyst with another function.

To the mixture of co-mulled binder containing molybdenum and/or tungsten oxide and zeolite, an unloaded binder material, such as alumina or another refractory oxide as described above, can be added. A drawback of such catalyst particles resides in the fact that the catalytically active components are diluted.

It is also possible to add one or more other materials containing catalytically active components to the above mixture, thereby creating the possibility to combine three or more catalyst functions in one catalyst particle.

It is important that during the process of the invention solid molybdenum and/or tungsten compounds are used. It has been found that use of solutions of tungsten and/or molybdenum compounds results in catalysts with an unsatisfactory strength. The solid molybdenum and/or tungsten compounds are suitably water-insoluble. It will be appreciated that, even when using well known water-insoluble compounds, a minute amount will be solved when contacted with water. Hence, when the solid compound is co-mulled in the presence of water, a small amount thereof may be solved. However, to fulfil the requirement of the present process, a solid molybdenum and/or tungsten compound must be present. Suitable water-insoluble molybdenum and/or tungsten compounds include molybdenum oxides, tungsten oxides, molybdenum sulphides, tungsten sulphides, molybdic acid and tungstic acid. Molybdenum and tungsten oxides are most preferred. The manufacture of such compounds is known in the art. It is possible to obtain these compounds by starting off with water-soluble compounds and precipitating water-insoluble compounds e.g. by alteration of pH or by evaporation of the water and calcination of the residue. Water-soluble compounds include ammonium molybdate, ammonium paramolybdate and ammonium permolybdate and ammonium tungstate, paratungstate and pertungstate.

It will be appreciated that the catalyst, apart from a molybdenum and/or tungsten compound preferably further contains other hydrogenating components, in particular nickel and/or cobalt and/or palladium and/or platinum compounds. It has been found that such other hydrogenating components or an additional amount of a molybdenum or tungsten compound can conveniently be incorporated into the binder material by carrying out the co-mulling in the presence of a solution containing the hydrogenating components. Therefore, preferably the binder material is co-mulled with the solid molybdenum and/or tungsten compound in the presence of a solution of a hydrogenating-metal salt. Preferably the hydrogenating-metal is selected from the group consisting of nickel, cobalt, molybdenum and tungsten. In particular the hydrogenating-metal is nickel and/or cobalt; most preferably it is cobalt. The solution is advantageously an aqueous solution.

The catalyst particles obtained via a process as described above have hydrogenating activity. It will be appreciated that it would be advantageous that not only the binder but also the zeolite is loaded with hydrogenating activity containing metal(s) or compound(s) thereof. This goal can be achieved by subjecting the particles obtained by the present process to an impregnation and/or ion exchange step. However, preferably the zeolite already contains a hydrogenating metal component when it is mixed with the binder material. Suitable hydrogenating metals include Group 8 and Group 6b metals, in particular platinum, palladium, nickel, cobalt, tungsten and molybdenum. The latter four metals are preferred. The hydrogenating metals can be deposited onto the zeolite by means of various conventional methods, e.g. ion-exchange or impregnation. However, preferably the zeolite containing a hydrogenating metal has been obtained by co-mulling the zeolite with a solid molybdenum and/or tungsten compound. The co-mulling of the zeolite with the solid molybdenum and/or tungsten compound is advantageously carried out in the presence of a solution of a hydrogenating metal salt. These hydrogenating metals are advantageously selected from platinum, palladium, nickel, cobalt, molybdenum and tungsten. In the case of the zeolite, nickel and/or cobalt are especially preferred.

The co-mulling of either the binder material or the zeolite or both can suitably be carried out in the presence of a peptizing agent, such as an acid, e.g. a mineral acid or acetic acid.

Shaping of the catalyst particles obtained in the present process can be done using any method known in the art. A very convenient way to shape the particles is extrusion. The material to be extruded can be simply the mixture of the zeolite and the co-mulled binder material. However, it is preferred to add some water during the mixing of the zeolite and the binder material to facilitate the mixing and the subsequent shaping, such as extrusion. The amount of water can easily be determined by the man skilled in the art, e.g. in dependence of the method which is used for the shaping.

After shaping the catalyst particles to the desired shape, e.g. extrudates, spheres, rods, trilobes and the like, the shaped catalyst particles are suitably dried. Drying can be carried out at ambient temperature, but elevated temperatures are desired to speed up the drying process. The drying temperature is preferably from 40 to 400, in particular from 100 to 300 °C. The dried particles are then preferably calcined at a temperature of 400 to 800, in particular 500 to 700 °C. The calcination can be carried out in air, nitrogen or any other gaseous environment.

The present process provides catalyst particles that have a high bulk crushing strength and further may contain hydrogenating activities with different aspects. It is possible to create catalyst particles with a hydrodenitrogenation and/or hydrodesulphurization activity on the binder, whereas a hydrocracking activity can be positioned on the zeolite. In this way a bifunctional catalyst can be obtained which is sufficiently strong to be commercially applicable.

Accordingly, the present invention further provides catalyst particles, preferably shaped by extrusion, having a bulk crushing strength of at least 0.8 MPa, and comprising a zeolite, a binder material, and a molybdenum and/or tungsten component, and obtainable by the process as described above. Bulk crushing strengths of greater than 1.55 MPa are attainable. The catalyst particles preferably contain the molybdenum and/or tungsten component in the form of their oxides and/or sulphides. The catalyst particles may further contain phosphorus and/or fluorine, which can be applied onto the catalyst by methods known in the art. The catalyst contains preferably from 5 to 80 %wt of binder material, preferably from 10 to 45 %wt, the percentages being based on the total weight of the binder material and the zeolite.

The amount of the hydrogenating components in the catalyst compositions suitably ranges from 2 to 40 parts by weight (pbw) of molybdenum and/or tungsten calculated as metal(s) per 100 pbw of total catalyst. When Group 8 metals are present, the amount thereof is suitably from 0.05 to 10 pbw per 100 pbw of catalyst. The catalyst composition, especially when it contains nickel and/or cobalt, is preferably in the sulphidic form. It may have been subjected to a sulphiding treatment prior to actual use in a hydrogenation process.

The catalyst of the invention can be used in any process wherein a hydrogenating catalyst is desired. Thus it is very suitable for use in processes for the hydroconversion of hydrocarbons. The catalyst is advantageously used in a hydrocracking and/or residue conversion process. Due to the possibility of the presence of hydrogenating components on the binder and the zeolite, a hydrotreating activity, e.g. hydrodenitrogenation and/or hydrodesulphurization activity, is combined with a hydrocracking activity.

Hydrocracking processes using the catalyst particles are preferably carried out in the presence of hydrogen and at a temperature of 250 to 500 °C, and at a pressure of 20 to 300 bar, in particular from 30 to 200 bar.

The catalyst particles of the present invention are suitable for use in a hydrocracking process in which heavy hydrocarbons to be hydrocracked are passed over a bed of an amorphous, preferably alumina-containing, hydrocracking catalyst and subsequently, without intermediate separation or liquid recycle, over a bed of catalyst particles according to the present invention. When used in this way the catalyst system provides an excellent cracking activity due to the earlier desulphurization and denitrogenation achieved by the first alumina catalyst and the binder material of the second catalyst, whereas the zeolitic component of the second catalyst provides an active cracking performance. Suitably, the effluent from the bed of second catalyst is then passed over a bed of an amorphous silica-alumina containing hydrofinishing catalyst. Apart from the advantages mentioned earlier the selectivity to the preparation of middle distillates is improved now due to the highly selective silica-alumina catalyst.

The invention will be further illustrated by means of the following Examples.

## EXAMPLE 1

In a suitable vessel, 202.2 g of alumina, having a loss on ignition of 25.8%, was mixed with 142.4 g of a cobalt nitrate solution having a cobalt concentration of 13.6 %wt, and 68.5 g of molybdenum trioxide. The admixture obtained was co-mulled for 10 to 20 minutes.

In another vessel 685.7 g of a zeolite Y, having a unit cell size of 2.432 nm and a loss on ignition of 12.5 %, was mixed with 197.0 g of a nickel nitrate solution having a nickel concentration of 14 %wt, 200 g of water, and 68.1 g of molybdenum trioxide. The admixture obtained was co-mulled for 10 to 20 minutes.

Subsequently, both admixtures were added together, and the resulting mixture was co-mulled for a further 45 minutes. During the co-mulling water was added periodically; 174.5 g of water was added in total. Then the mixture was extruded, the extrudates obtained were dried at 120 °C for 2 hours and the dried particles were calcined in air at 560 °C for 2 hours.

The resulting catalyst particles contained 6.4 %wt of cobalt and 19.2 %wt of molybdenum on alumina, the percentages being based on the total of hydrogenating metal compounds and alumina, and 3.9 %wt of nickel and 6.45 %wt of molybdenum on zeolite, the percentages being based on the total of hydrogenating metal compounds and zeolite. The catalyst as a whole contained 3.1 %wt of nickel, 1.7 %wt of cobalt and 10.1 %wt of molybdenum based on the total of hydrogenating metal compounds and alumina and zeolite. The weight ratio between alumina and zeolite was 1:4.

The catalyst particles had a bulk crushing strength of 1.21 MPa, determined according to J.R. Anderson, K.C. Pratt, "Introduction to characterization of catalysts", Academic Press, p. 182-184.

EXAMPLE 2

In a manner analogous to the method of Example 1 another catalyst composition was prepared, the differences residing in different amounts of zeolite, alumina and hydrogenating components. The resulting catalyst contained 1.49 %wt of nickel, 1.97 %wt of cobalt, 7.87 %wt of molybdenum of which 75% was present on the alumina and 25% on the zeolite, whereas the weight ratio between alumina and zeolite was 3:2. The catalyst particles after drying and calcination had a bulk crushing strength of over 1.55 MPa.

COMPARATIVE EXPERIMENT 1

A comparative catalyst composition was prepared by mixing the above described zeolite with a solution of nickel nitrate and cobalt nitrate. To this mixture was added alumina and molybdenum trioxide and the resulting mixture was co-mulled, extruded and the extrudates dried and calcined. The bulk crushing strength of the particles obtained was greater than 1.55 MPa. The catalyst composition contained 1.65 %wt of nickel, 1.65 %wt of cobalt and 9.60 wt of molybdenum, and the weight ratio between alumina and zeolite was 3:2.

COMPARATIVE EXPERIMENT 2

The above described zeolite (343 g) was mixed with a nickel nitrate solution (80 g, 14% Ni) and an ammonium heptamolybdate solution (52 g. 33% Mo). To this mixture a commercially available alumina-based catalyst was added (300 g), which catalyst contained 3 %wt of cobalt and 9 %wt of molybdenum introduced by impregnating an alumina extrudate with a solution containing cobalt and molybdenum compounds. In addition 202 g of alumina as described above was added as extra binder. The resulting admixture was extruded. The extrusion was troublesome. After extrusion the extrudates fell apart, indicating the absence of a significant bulk crushing strength.

EXAMPLE 3

The hydrodesulphurization activity of various catalyst compositions was tested by subjecting a gas oil to a hydrotreatment using the catalysts of Example 1 (Catalyst 1), Example 2 (Catalyst 2), Comparative experiment 1 (Catalyst 3), and a Catalyst 4 comprising 3.9 %wt nickel and 6.3 %wt molybdenum on a base of alumina and the above described zeolite Y, prepared by co-mulling the zeolite, alumina binder, solid molybdenum trioxide and a nickel nitrate solution, extruding the co-mulled mixture, drying and calcining the extrudates. The weight ratio of alumina to zeolite in catalyst 4 was 1:4.

The feedstock gas oil contained 30 %wt of hydrocarbons boiling above 370 °C and contained 1.81 %wt sulphur. The hydrotreatment was carried out by passing the gas oil over the catalysts, diluted with SiC particles in a 1:1 volume ratio. The reaction temperature was 350 °C, the pressure was 25 bar and the hydrogen to gas oil ratio was 250 Nl/kg. The hydrotreatment was carried out at various space velocities. These space velocities and the results of the experiments are indicated in Table I below. The hydrodesulphurization activity was expressed as the weight percentage of sulphur in the liquid product.

From comparison of the results it is apparent that the catalysts according to the invention have a better desulphurization activity than both other catalysts (cf. catalyst 1 vs catalyst 4 and catalyst 2 vs catalyst 3).

It is to be noted that catalyst 3 performs worse than catalyst 2, despite the fact that catalyst 3 contains both cobalt and nickel like catalyst 2 and contains molybdenum in a higher content than catalyst 2.

TABLE I

| Experiment | 1 | 2 | 3 | 4 | 5 | 6 | 7 | 8 | 9 | 10 | 11 | 12 |
|---|---|---|---|---|---|---|---|---|---|---|---|---|
| Catalyst | 1 | 1 | 1 | 2 | 2 | 2 | 3 | 3 | 3 | 4 | 4 | 4 |
| Space Velocity (g/g.h) | 4 | 8 | 14.5 | 4 | 8 | 14.5 | 4 | 8 | 14.5 | 4 | 8 | 14.8 |
| Hydrodesulphurization activity (%wt S) | 0.56 | 0.80 | 1.03 | 0.43 | 0.68 | 0.89 | 0.51 | 0.78 | 0.96 | 0.62 | 0.88 | 1.08 |

EXAMPLE 4

To show the hydrocracking activity of the catalysts of the present invention, catalysts 1 and 4 were used in a hydrocracking experiment of a vacuum gasoil with the following boiling characeristics: < 180

6

°C:0.1 wt; 180-370 °C:30.7 wt; > 370 °C:69.2 wt. The catalysts were presulphided. Then the catalysts were tested in a 1:1 (volume) dilution with 0.1 mm SiC particles under the following conditions: total pressure 60 bar, $H_2$/feed ratio of 240 Nl/kg, $H_2S$/feed ratio of 30 Nl/kg, a $NH_3$/feed ratio of 1.8 Nl/kg and a WHSV of 2.7 g/g.h. The temperature was set to obtain a 20% conversion of 370 °C$^+$ material.

The results are indicated in Table II. From these results it is apparent that the catalyst prepared according to the invention has a hydrocracking activity which is substantially equal to the activity of a conventional hydrocracking catalyst, whereas its selectivity to middle distillates (180-370 °C fraction) is somewhat better than that of a conventional catalyst.

In view of the results shown in Examples 3 and 4 it is apparent that the catalysts prepared according to the present invention are at least as good as conventional hydrocracking catalysts, whereas their hydrodesulphurization activity is substantially better.

## TABLE II

| Experiment No. | 13 | 14 |
|---|---|---|
| Catalyst | 1 | 4 |
| Temperature, °C | 401 | 399 |
| Product distribution, %w | | |
| < 180 °C | 6.6 | 7.9 |
| 180-370 °C | 38.0 | 36.7 |
| > 370 °C | 55.4 | 55.4 |

**Claims**

1. Process for the preparation of catalyst particles with hydrogenating activity, which process comprises co-mulling a binder material with a solid molybdenum and/or tungsten compound, mixing the co-mulled product so obtained with a zeolite, shaping the mixture so obtained to yield catalyst particles, and drying the catalyst particles.

2. Process according to claim 1, in which the zeolite is a faujasite-type zeolite.

3. Process according to claim 2, in which the zeolite is zeolite Y.

4. Process according to any one of claims 1-3, in which the binder material has been selected from silica, alumina, silica-alumina, magnesia, zirconia and thoria.

5. Process according to any one of claims 1-4, in which the solid molybdenum and/or tungsten compound has been selected from molybdenum oxides, tungsten oxides, molybdenum sulphides, tungsten sulphides, molybdic acid and tungstic acid.

6. Process according to any one of claims 1-5, in which the binder material is co-mulled with the solid molybdenum and/or tungsten compound in the presence of a solution of a hydrogenating-metal salt.

7. Process according to claim 6, in which the hydrogenating-metal salt is a salt of nickel, cobalt, molybdenum and/or tungsten, preferably of cobalt.

8. Process according to any one of claims 1-7, in which the zeolite contains a hydrogenating-metal component.

9. Process according to claim 8, in which the hydrogenating-metal component has been selected from a nickel, cobalt, tungsten and molybdenum component.

EP 0 342 759 B1

**10.** Process according to claim 9, in which the hydrogenating-metal component is a nickel component.

**11.** Process according to any one of claims 8-10, in which the zeolite containing a hydrogenating-metal component has been obtained by co-mulling the zeolite with a solid molybdenum and/or tungsten compound.

**12.** Process according to claim 11, in which the co-mulling of the zeolite has been carried out in the presence of a solution of a hydrogenating-metal salt.

**13.** Process according to claim 12, in which the hydrogenating-metal salt has been selected from the salts of nickel, cobalt, molybdenum and tungsten.

**14.** Process according to claim 13, in which the hydrogenating-metal salt is a nickel salt.

**15.** Process according to any one of claims 1-14, in which the catalyst particles are shaped by extrusion.

**16.** Process according to any one of claims 1-15, in which the catalyst particles are dried at a temperature of 40 to 400 °C, preferably from 100 to 300 °C.

**17.** Process according to any one of claims 1-16, in which the catalyst particles are subsequently calcined at a temperature from 400 to 800 °C, preferably from 500 to 700 °C.

**Patentansprüche**

**1.** Verfahren zur Herstellung von Katalysatorteilchen mit Hydrieraktivität, welches Verfahren das gemeinsame Vermahlen im Kollergang eines Bindematerials mit einer festen Molybdän- und/oder Wolframverbindung, das vermischen des so erhaltenen vermahlenen Produkts mit einem Zeolith, das Formen der so erhaltenen Mischung zu Katalysatorteilchen und das Trocknen der Katalysatorteilchen umfaßt.

**2.** Verfahren nach Anspruch 1, in welchem der Zeolith ein Zeolith vom Faujasit-Typ ist.

**3.** Verfahren nach Anspruch 2, in welchem der Zeolith ein Zeolith Y ist.

**4.** Verfahren nach einem der Ansprüche 1 bis 3, in welchem das Bindematerial ausgewählt worden ist aus Siliciumdioxid, Aluminiumoxid, Siliciumdioxid-Aluminiumoxid, Magnesiumoxid, Zirkonoxid und Thoriumoxid.

**5.** Verfahren nach einem der Ansprüche 1 bis 4, in welchem die feste Molybdän- und/oder Wolframverbindung ausgewählt ist aus Molybdänoxiden, Wolframoxiden, Molybdänsulfiden, Wolframsulfiden, Molybdänsäure und Wolframsäure.

**6.** Verfahren nach einem der Ansprüche 1 bis 5, in welchem das Bindematerial gemeinsam mit der festen Molybdän- und/oder Wolframverbindung in Gegenwart einer Lösung eines hydrierend wirkenden Metallsalzes im Kollergang vermahlen wird.

**7.** Verfahren nach Anspruch 6, in welchem das hydrierend wirkende Metallsalz ein Nickel-, Kobalt-, Molybdän- und/oder Wolframsalz, vorzugsweise ein Kobaltsalz ist.

**8.** Verfahren nach einem der Ansprüche 1 bis 7, in welchem der Zeolith eine hydrierend wirkende Metallkomponente umfaßt.

**9.** Verfahren nach Anspruch 8, in welchem die hydrierend wirkende Metallkomponente ausgewählt worden ist aus einer Nickel-, Kobalt-, Wolfram- und Molybdänkomponente.

**10.** Verfahren nach Anspruch 9, in welchem die hydrierend wirkende Metallkomponente eine Nickelkomponente ist.

8

**11.** Verfahren nach einem der Ansprüche 8 bis 10, in welchem der eine hydrierend wirkende Metallkomponente enthaltende Zeolith durch gemeinsames Vermahlen im Kollergang des Zeoliths mit einer festen Molybdän- und/oder Wolframverbindung erhalten worden ist.

**12.** Verfahren nach Anspruch 11, in welchem das gemeinsame Vermahlen im Kollergang des Zeoliths in Gegenwart einer Lösung eines hydrierend wirkenden Metallsalzes durchgeführt worden ist.

**13.** Verfahren nach Anspruch 12, in welchem das hydrierend wirkende Metallsalz ausgewählt ist aus Nickel-, Kobalt-, Molybdän- und Wolframsalzen.

**14.** Verfahren nach Anspruch 13, in welchem das hydrierend wirkende Metallsalz ein Nickelsalz ist.

**15.** Verfahren nach einem der Ansprüche 1 bis 14, in welchem die Katalysatorteilchen durch Extrudieren geformt werden.

**16.** Verfahren nach einem der Ansprüche 1 bis 15, in welchem die Katalysatorteilchen bei einer Temperatur von 40 bis 400°C, vorzugsweise von 100 bis 300°C, getrocknet werden.

**17.** Verfahren nach einem der Ansprüche 1 bis 16, in welchem die Katalysatorteilchen anschließend bei einer Temperatur von 400 bis 800°C, vorzugsweise von 500 bis 700°C, calciniert werden.

**Revendications**

**1.** Procédé pour la préparation de particules de catalyseur ayant une activité hydrogénante, selon lequel on malaxe ensemble une matière servant de liant et un composé solide du molybdène et/ou du tungstène, on mélange le produit co-malaxé ainsi obtenu avec une zéolite, on met en forme le mélange ainsi obtenu de manière à donner des particules de catalyseur et on sèche les particules de catalyseur.

**2.** Procédé selon la revendication 1, dans lequel la zéolite est une zéolite du type faujasite.

**3.** Procédé selon la revendication 2, dans lequel la zéolite est de la zéolite Y.

**4.** Procédé selon l'une quelconque des revendications 1-3, dans lequel la matière servant de liant a été choisie parmi les suivantes : silice, alumine, silice-alumine, magnésie, zircone et thorine.

**5.** Procédé selon l'une quelconque des revendications 1-4, dans lequel le composé solide du molybdène et/ou du tungstène a été choisi parmi les oxydes de molybdène, les oxydes de tungstène, les sulfures de molybdène, les sulfures de tungstène, l'acide molybdique et l'acide tungstique.

**6.** Procédé selon l'une quelconque des revendications 1-5, dans lequel la matière servant de liant est co-malaxée avec le composé solide du molybdène et/ou du tungstène en présence d'une solution d'un sel de métal hydrogénant.

**7.** Procédé selon la revendication 6, dans lequel le sel de métal hydrogénant est un sel de nickel, de cobalt, de molybdène et/ou de tungstène, de préférence de cobalt.

**8.** Procédé selon l'une quelconque des revendications 1-7, dans lequel la zéolite contient un constituant métal hydrogénant.

**9.** Procédé selon la revendication 8, dans lequel le constituant métal hydrogénant a été choisi parmi un constituant nickel, cobalt, tungstène et molybdène.

**10.** Procédé selon la revendication 9, dans lequel le constituant métal hydrogénant est un constituant nickel.

**11.** Procédé selon l'une quelconque des revendications 8-10, dans lequel la zéolite contenant un constituant métal hydrogénant a été obtenue en co-malaxant la zéolite avec un composé solide du molybdène et/ou du tungstène.

**12.** Procédé selon la revendication 11, dans lequel le co-malaxage de la zéolite a été effectué en présence d'une solution d'un sel de métal hydrogénant.

**13.** Procédé selon la revendication 12, dans lequel le sel de métal hydrogénant a été choisi parmi les sels de nickel, de cobalt, de molybdène et de tungstène.

**14.** Procédé selon la revendication 13, dans lequel le sel de métal hydrogénant est un sel de nickel.

**15.** Procédé selon l'une quelconque des revendications 1-14, dans lequel les particules de catalyseur sont formées par extrusion.

**16.** Procédé selon l'une quelconque des revendications 1-15, dans lequel les particules de catalyseur sont chauffées à une température de 40 à 400°C, de préférence de 100 à 300°C.

**17.** Procédé selon l'une quelconque des revendications 1-16, dans lequel les particules de catalyseur sont ensuite calcinées à une température comprise entre 400 et 800°C, de préférence entre 500 et 700°C.